# EUROPEAN PATENT APPLICATION

(11) **EP 4 546 841 A1**
(43) Date of publication of application: **30.04.2025**
(21) Application number: 23846838.3
(22) Date of filing: 29.06.2023
(51) Int. Cl.: H04W 12/06, G06F 21/32, G06V 40/16, G06V 40/18, H04L 9/32, H04W 12/50, H04W 12/04, H04W 76/10, G06Q 20/32, G06V 40/70, H04L 9/40

(54) **METHOD FOR CONNECTING TO EXTERNAL DISPLAY DEVICE ON BASIS OF BIOMETRIC INFORMATION, AND ELECTRONIC DEVICE**

(30) Priority: 26.07.2022 KR 20220092396; 13.09.2022 KR 20220114762
(71) Applicant: Samsung Electronics Co., Ltd., Suwon-si, Gyeonggi-do 16677 (KR)
(72) Inventor: KANG, Jinwook, Suwon-si, Gyeonggi-do 16677 (KR); LEE, Dasom, Suwon-si, Gyeonggi-do 16677 (KR); CHANG, Moonsoo, Suwon-si, Gyeonggi-do 16677 (KR)
(74) Representative: Gulde & Partner
(86) International application number: PCT/KR2023/009127
(87) International publication number: WO 2024/025179

(57) **Abstract**

One embodiment of the present invention can include a camera module, a communication module, a display, a memory, and a processor operatively connected to at least one of the camera module, the communication module, the display, and the memory. The processor can be configured to: acquire, on the basis of a request for connection to an external display device, a facial image of a user through the camera module when the external display device is worn; authenticate the face by comparing the acquired facial image with facial information stored in the memory; display, on the display, an authentication code associated with the external display device related to the stored facial information, when the face authentication is complete; receive a request for communication connection to the electronic device from the external display device through the communication module on the basis of the authentication result of the authentication code in the external display device; and connect to the external display device in response to the request. Various embodiments are possible.

## Description

### [Technical Field]

Embodiments of the disclosure relate to a method for connecting to an external display device, based on biometric information, and an electronic device.

### [Background Art]

With the advance of digital technologies, various types of electronic devices, such as a mobile terminal, a personal digital assistant (PDA), an electronic notebook, a smartphone, a tablet personal computer (PC), and a wearable device, have been widely used. The electronic devices have been continuously improved in terms of the hardware and/or software of the electronic devices to support and increase functions thereof.

For example, the electronic device (e.g., a smartphone) may establish connection with a wearable display device (e.g., AR glasses) and provide an expanded reality (XR) content, such as virtual reality (VR), augmented reality (AR), and/or mixed reality (MR). The electronic device implements an AR environment, including a tethered AR mode in which a virtual content generated by the electronic device is provided through a display of a wearable display device, and a stand-alone AR mode in which the wearable display device independently generates and displays a virtual content through a display without connection to the electronic device.

### [Disclosure of Invention]

### [Technical Problem]

An electronic device may execute an application for connection with an external display device (or a wearable display device) (e.g., AR glasses) and identify an ID of the external display device through the executed application. The electronic device may, in case that the identified ID of the external display device is selected, receive a pass code displayed on the external display device from a user. The electronic device may, in case that the input pass code is identified, establish connection with the external display device. Thereafter, the user may be required to identify and select an ID and input a pass code whenever connecting the electronic device to an external display device.

An embodiment may provide a method and a device for relatively easily connecting an electronic device and an external display device by using biometric information in a state in which the user wears the external display device.

The technical problems solved by the disclosure are not limited to the above technical problems and those skilled in the art will more clearly understand other technical problems from the following description.

### [Solution to Problem]

An electronic device according to an embodiment of the disclosure may include a camera module, a communication module, a display, a memory, and a processor operatively connected to at least one of the camera module, the communication module, the display, or the memory, wherein the processor is configured to acquire, based on a request for connection with an external display device, a face image of a user through the camera module in a state in which the external display device is worn, perform face authentication by comparing the acquired face image with face information stored in the memory, display, on the display, an authentication code associated with the external display device associated with the stored face information, when the face authentication is completed, receive a request for communication connection with the electronic device from the external display device through the communication module, based on the authentication result of the authentication code in the external display device, and establish connection with the external display device, in response to the request.

An electronic device according to an embodiment of the disclosure may include a camera module, a communication module, a display, a memory, and a processor operatively connected to at least one of the camera module, the communication module, the display, or the memory, wherein the processor is configured to detect whether the electronic device is worn on a user, capture an authentication code displayed on a display of an external electronic device through the camera module in a state in which the electronic device is worn on the user, authenticate the authentication code to extract device information of the external electronic device from the authentication code, transmit a request for connection with the external electronic device through the communication module, based on the extracted device information, and establish connection with the external electronic device, in response to the request.

An operation method of an electronic device according to an embodiment of the disclosure may include an operation of acquiring, based on a request for connection with an external display device, a face image of a user through a camera module of the electronic device in a state in which the external display device is worn, an operation of performing face authentication by comparing the acquired face image with face information stored in a memory of the electronic device, an operation of displaying, in case that the face authentication has been completed, on a display of the electronic device, an authentication code associated with the external display device associated with the stored face information, an operation of receiving a request for communication connection with the electronic device from the external display device through a communication module of the electronic device, based on the authentication result of the authentication code in the external display device, an operation of comparing iris information stored in a security area of the memory, in response to the authenticated face information, so as to perform iris authentication, and an operation of establishing, when the iris authentication is completed, connection with the external display device.

### [Advantageous Effects of Invention]

According to an embodiment, the connection operation between an electronic device and an external display device may be relatively simplified by authenticating the face of a user through an electronic device in a state in which the user is wearing an external display device, displaying an authentication code (e.g., a barcode or a QR code) for authenticating the external display device on a display of the electronic device when the face authentication is completed, and recognizing the authentication code with the external display device.

According to an embodiment, the security when the electronic device and the external display device are connected may be improved by matching iris information acquired through iris authentication in the external display device and face information acquired through face authentication in the electronic device by using device information of the external display device.

According to an embodiment, the user convenience may be increased while maintaining relatively high security by connecting the electronic device and the external display device only in case that the face of the user is authenticated through the electronic device and the iris authentication is completed through the external display device (e.g., composite authentication).

It will be appreciated by a person skilled in the art that effects which may be achieved from the disclosure are not limited to the effects described above and other effects that are not described above will be clearly understood from the following detailed description.

### [Brief Description of Drawings]

FIG. 1 is a block view of an electronic device in a network environment according to an embodiment.
FIG. 2 is a view illustrating an example of an external display device according to an embodiment.
FIG. 3 is a block view illustrating an external display device according to an embodiment.
FIG. 4 is a signal flow illustrating a method for matching biometric information of an electronic device and an external display device according to an embodiment.
FIG. 5 is a signal flow illustrating a method for connecting an electronic device and an external display device according to an embodiment.
FIG. 6 is a view illustrating an example of recognizing an authentication code displayed on an electronic device through an external display device according to an embodiment.
FIG. 7 is a flowchart illustrating an operation method of an electronic device according to an embodiment.
FIG. 8 is a flowchart illustrating an operation method of an external display device according to an embodiment.
FIG. 9 is a signal flow illustrating a method for iris authentication before an electronic device and an external display device are connected according to an embodiment.
FIG. 10 is a signal flow illustrating a method for iris authentication before an electronic device and an external display device are connected according to an embodiment.
FIG. 11 is a flowchart illustrating an iris authentication method of an electronic device according to an embodiment.
FIG. 12 is a flowchart illustrating an iris authentication method of an external display device according to an embodiment.

### [Mode for the Invention]

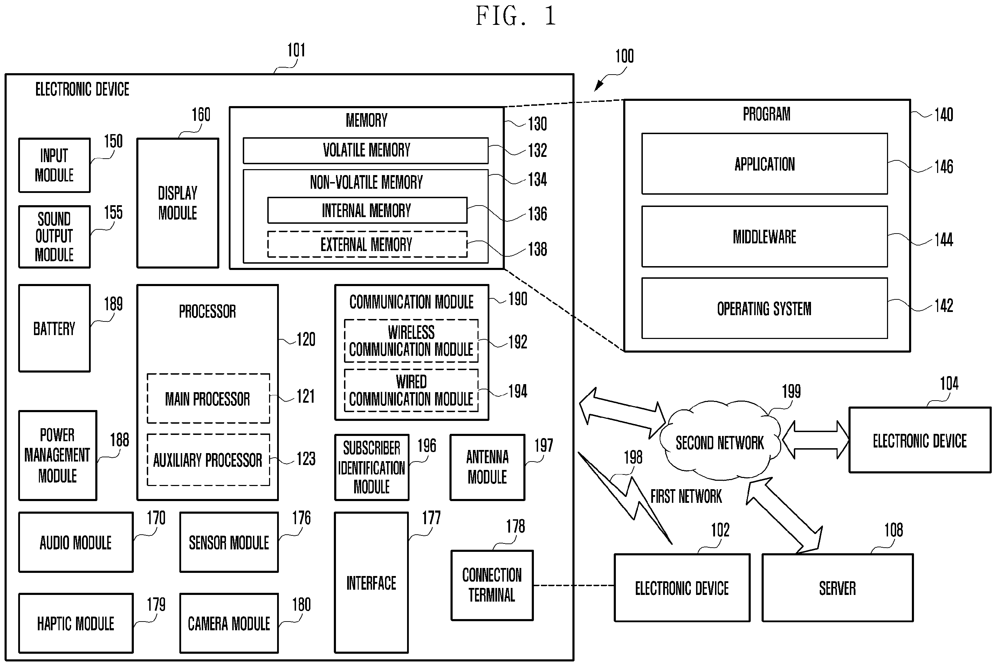

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

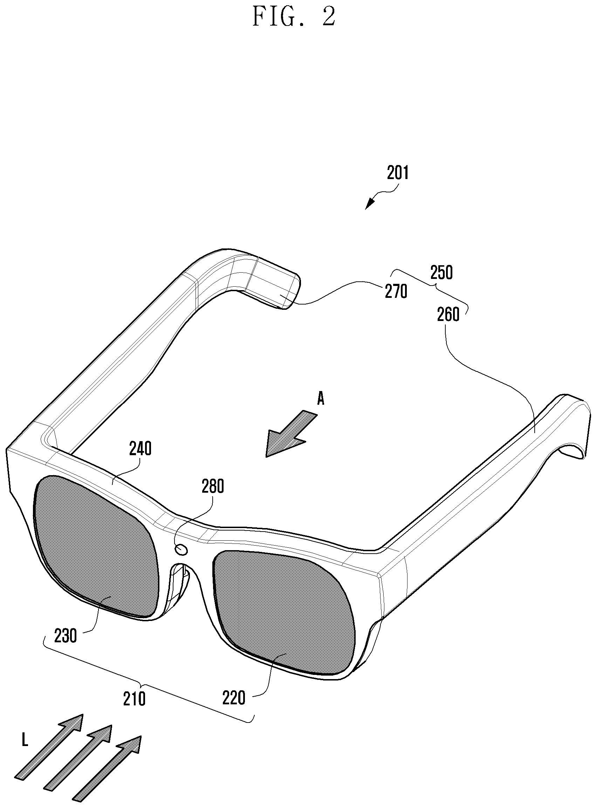

FIG. 2 is a view illustrating an example of an external display device according to an embodiment.

Referring to FIG. 2, the external display device 201 (or a wearable display device) (e.g., the electronic device 102 in FIG. 1) according to an embodiment may include a display in the form of eyewear, and may include devices in various shapes, which may be worn on a portion (e.g., the face or a head portion) of the user's body and provide augmented reality (AR), mixed reality (MR), and/or virtual reality (VR) services. For example, the external display device 201 may be implemented in the form of at least one of glasses, goggles, a helmet, or a hat, but is not limited thereto. The external display device 201 described below may correspond to a device including at least a portion of components included in the electronic device 101 as described above with reference to FIG. 1. Even if not mentioned in the following description, the external display device 201 according to the disclosure may be interpreted as including various components as described with reference to FIG. 1.

According to an embodiment, the external display device 201 may provide an AR service for adding virtual information (or a virtual object) to at least a portion of the actual real space (or environment). For example, the external display device 201 may superimpose virtual information on an actual real space corresponding to the wearer's field of view (FOV) to provide same to the user.

The external display device 201 may include a glass member (or window member) 210 disposed at a position corresponding to both eyes (e.g., the left eye and the right eye) of the user, a main frame (or body part) 240 configured to fix the glass member 210, a support frame (or support member) 250 connected to both ends of the main frame 240 and mounted on at least a portion of an ear of the user, and a camera module 280 (e.g., a shooting camera).

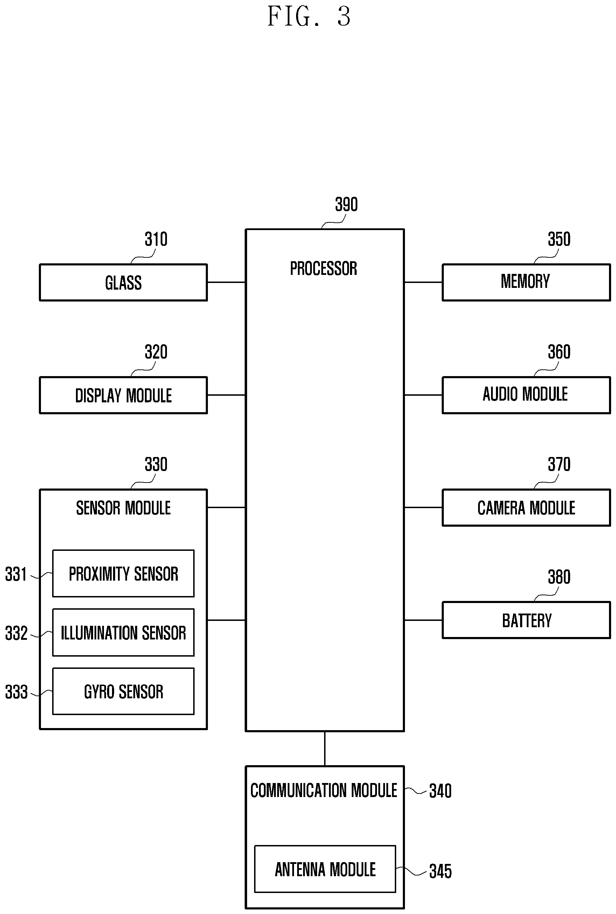

According to an embodiment, the glass member 210 may include a first glass 220 corresponding to the left eye of the user and a second glass 230 corresponding to the right eye of the user. According to an embodiment, the glass member 210 may be supported by the main frame 240. For example, the glass member 210 may be fitted into an opening disposed on the main frame 240. According to an embodiment, an AR image released from a display module (e.g., the display module 320 in FIG. 3) may be projected onto the glass member 210.

According to an embodiment, a waveguide (e.g., an optical waveguide or a transparent waveguide) may be configured on at least a partial area of the glass member 210. According to an embodiment, the waveguide may function to guide an AR image released from the display module to the user's eyes. According to an embodiment, although, as illustrated in FIG. 2, it is described that the glass member 210 is implemented in the form that is separated into the first glass 220 and the second glass 230 to correspond to the user's left and right eyes, respectively, the glass member 210 according to some embodiments may be implemented in the form of a single glass without distinction between the first glass 220 and the second glass 230.

According to an embodiment, the main frame 240 and the support frame 250 may be implemented in the form of glasses.

In an embodiment, the main frame 240 may have a structure at least partially mounted on the user's nose. According to an embodiment, the main frame 240 may support the glass member 210. According to an embodiment, the main frame 240 may be made of synthetic resin material. According to an embodiment, the glass member 210 is fitted into the opening disposed on the main frame 240 so that the main frame 240 may support the glass member 210.

In an embodiment, the support frame 250 may include a first support frame 260 at least partially mounted on a first direction ear (e.g., the left ear) and a second support frame 270 at least partially mounted on a second direction ear (e.g., the right ear). For example, the main frame 240 and the support frame 250 (e.g., the first support frame 260 and the second support frame 270) may be connected through a hinge part (not shown) and coupled to be foldable.

In an embodiment, the support frame 250 may be rotatably connected to the main frame 240. According to an embodiment, the support frame 250 may include a first support frame 260 and a second support frame 270. When viewed from direction "A", the first support frame 260 may be connected to the main frame 240 at a left side (e.g., a first direction) with respect to the main frame 240. When viewed from direction "A", the second support frame 270 may be connected to the main frame 240 at a right side (e.g., a second direction) with respect to the main frame 240.

In an embodiment, the support frame 250 may be installed and fixed to a portion of the main frame 240. For example, the first support frame 260 connected to the left side of the main frame 240 and the second support frame 270 connected to the right side of the main frame 240 may be configured to be connected to each other. According to an embodiment, the support frame 250 connected to both sides of the main frame 240 may have a ring form and may be fitted to the head of user to be worn. In addition, the support frame 250 may be transformed into various forms so that the external display device 201 may be worn on the user's face.

According to an embodiment, the support frame 250 may be disposed to be at least partially worn on the user's ear. For example, the external display device 201 may be worn on the user's face in the manner in which the support frame 250 connected to the main frame 240 is at least partially worn on the user's ear. In an embodiment, the support frame 250 may rotate with respect to the main frame 240. According to an embodiment, the support frame 250 rotates in a direction closer to the main frame 240 so that a volume of the external display device 201 may be reduced.

According to an embodiment, the display module (e.g., the display module 320 in FIG. 3) may output an AR image generated by a processor 120 of the electronic device 101 or a processor (e.g., the processor 390 in FIG. 3) of the external display device 201. In case that the display module generates an AR image and projects the AR image onto the glass member 210, AR may be realized by combining visible light L incident from the front (e.g., the direction the user is looking) through the glass member 210 with objects included in the AR image. The display module may correspond to a projector (e.g., a micro-projector or PICO projector) relatively small in size. For example, the display module may include a laser scanning display (LSD), a digital micro-mirror display (DMD), and/or a liquid crystal on silicon (LCoS). According to an embodiment, the display module may include a transparent display. In this case, a light-emitting element included in the display module may be directly disposed on the glass member 210. Additionally, the display module may include various display devices for realizing AR.

In an embodiment, the glass member 210, the support frame 250, and/or the display module (e.g., the display module 320 in FIG. 3) may be provided in pairs to correspond to the user's left and right eyes. For example, the glass member 210 may include the first glass 220 and the second glass 230, and the support frame 250 may include the first support frame 260 and the second support frame 270. According to some embodiments, at least some of the components described above may have different configurations for the left eye and those for the right eye.

According to an embodiment, the camera module 280 may represent, for example, a shooting camera (e.g., front shooting camera). For example, the camera module 280 may be disposed and realized on the main frame 240 to capture a subject in the front (or the front that the user faces) of the external display device 201. For example, the camera module 280 may be disposed at approximately the center portion (or the center point) between the first glass 220 and the second glass 230 in the main frame 240 to capture the front of the main frame 240. In an embodiment, the front of the main frame 240 may represent a direction the user faces when the user wears the external display device 201. In an embodiment, the external display device 201 may include multiple other cameras in addition to the camera module 280.

The camera module 280 may correspond to a camera (e.g., an RGB camera) for capturing images corresponding to a user's field of view (FoV) and/or measuring distance to an object. The camera module 280 may further include an eye tracking camera module for identifying a direction of the user's gaze. The camera module 280 may further include a recognition camera module (a gesture camera module) for recognizing a predetermined space.

The shooting camera may capture the front direction of the external display device 201 and the eye tracking camera may capture a direction opposite a capturing direction of the shooting camera. For example, the eye tracking camera may include a first eye tracking camera configured to partially capture the left eye of the user and a second eye tracking camera configured to partially capture the right eye of the user. According to an embodiment, the external display device 201 may display a virtual object (or virtual information) associated with the AR service based on image information associated with the actual real space acquired through the shooting camera. According to an embodiment, the external display device 201 may display a virtual object based on a display module disposed to correspond to both eyes of the user (e.g., the first display module corresponding to the left eye and/or the second display module corresponding to the right eye). According to an embodiment, the external display device 201 may display a virtual object based on preconfigured configuration information (e.g., resolution, a frame rate, brightness, and/or a display area).

According to an embodiment, the shooting camera may include a camera having high resolution , such as a high resolution (HR) camera and/or a photo video (PV) camera. For example, the shooting camera may be used to acquire high-quality images using autofocus and image stabilization (OIS). The shooting camera may be realized as a global shutter (GS) camera and a rolling shutter camera (RS) in addition to a color camera.

According to an embodiment, the eye tracking camera may detect a direction of the user's gaze (e.g., eye movement). For example, the eye tracking camera may detect a pupil of the user to track the gaze direction. In an embodiment, the tracked gaze direction may be used for the center of a virtual image including a virtual object to move according to the gaze direction. For example, the eye tracking camera may be the global shutter (GS) camera to detect the pupil and track fast eye movement without screen drag, and the performance and specifications of each eye tracking camera may be substantially the same.

According to an embodiment, the recognition camera may detect a user gesture within a preconfigured distance (e.g., a predetermined space) and/or a predetermined space. According to an embodiment, the recognition camera may be used for head tracking of 3 depth of field (3DoF) and 6DoF, and hand detection and/or hand tracking. For example, the recognition camera may be used for spatial recognition for 6DoF and performing simultaneous localization and mapping (SLAM) functions through depth shooting. According to some embodiments, the recognition camera may be used for a gesture recognition function for recognizing a user's gesture. The recognition camera may include a camera including a global shutter (GS). For example, the recognition camera may include a camera including a GS having relatively little screen drag (or having a reduced RS phenomenon), such as a rolling shutter (RS) camera to detect and track fast hand gestures and/or fine movement of fingers.

According to an embodiment, the external display device 201 may user at least one camera to detect an eye corresponding to a dominant eye and/or supplementary eye among the user's left and/or right eyes. For example, the external display device 201 may detect an eye corresponding to a dominant eye and/or non-dominant eye, based on a gaze direction of a user with respect to an external object or a virtual object.

The number or a position of the camera module 280 (e.g., the shooting camera, the eye tracking camera, and/or the recognition camera) may not be limited. For example, the number or the position of the camera module 280 (e.g., the shooting camera, the eye tracking camera, and/or the recognition camera) may be variously changed based on a form (e.g., a shape or a size) of the external display device 201.

According to an embodiment, the external display device 201 may include at least one illumination member (or an illumination LED) to increase accuracy of the camera module 280 (e.g., the shooting camera, the eye tracking camera, and/or the recognition camera). For example, the first illumination member may be disposed at a portion corresponding to the user's left eye and a second illumination member may be disposed at a portion corresponding to the user's right eye.

According to an embodiment, the external display device 201 may further include a microphone (e.g., a first microphone and a second microphone) configured to receive a user's voice and an ambient sound. According to an embodiment, the external display device 201 may further include a first speaker configured to transfer an audio signal to the left ear of the user and a second speaker configured to transfer an audio signal to the right ear of a user.

FIG. 3 is a block view illustrating an external display device according to an embodiment.

Referring to FIG. 3, the external display device 201 according to an embodiment may include a glass 310 (e.g., the glass member 210 in FIG. 2), a display module 320, a sensor module 330, a communication module 340, a memory 350, an audio module 360, a camera module 370 (e.g., the camera module 280 in FIG. 2), a battery 380, and a processor 390. According to an embodiment, a component included in the external display device 201 may be understood as, for example, a hardware module (e.g., circuitry).

According to an embodiment, the glass 310 (e.g., the first glass 220 and/or the second glass 230 in FIG. 2) may include a condensing lens and/or a transparent waveguide. For example, the transparent waveguide may be at least partially located at a portion of the glass 310. According to an embodiment, light emitted from the display module 320 may be incident to one end of the glass 310 and the incident light may be transferred to the user through a waveguide disposed inside the glass 310. The waveguide may be made of glass or a polymer, and may include a nanopattern, for example, a grating structure having a polygonal or curved surface shape disposed on a surface inside or outside.

According to an embodiment, the display module 320 may include multiple panels (or display areas) and the multiple panels may be positioned on the glass 310. According to an embodiment, at least a portion of the display module 320 may be made of transparent element, and the user may recognize the actual real space behind the rear surface of the display module 320 through the display module 320. According to an embodiment, the display module 320 may display a virtual object (or virtual information) on at least a partial area of the transparent element to make it appear to the user that the virtual object has been added to at least a portion of the actual real space.

According to an embodiment, the sensor module 330 may include a proximity sensor 331, an illuminance sensor 332, and/or a gyro sensor 333. The proximity sensor 331 may detect an object adjacent to the external display device 201. The illuminance sensor 332 may measure an ambient brightness level of the external display device 201. According to an embodiment, the processor 390 may identify a brightness level around the external display device 201 by using the illuminance sensor 332 and change brightness-related configuration information of the display module 320 based on the brightness level. For example, when the ambient brightness is higher than configured brightness, the processor 390 may configure the brightness level of the display module 320 to be higher to improve visibility for the user. The gyro sensor 333 may detect a state and a position of the external display device 201. For example, the gyro sensor 333 may detect whether the external display device 201 is properly worn on the user's head. For another example, the gyro sensor may detect a movement of the external display device 201 or the user wearing the external display device 201.

The communication module 340 may correspond to the wireless communication module 192 as shown in FIG. 1. According to an embodiment, the external display device 201 may perform wireless communication with an external device (e.g., the server 201 and/or other electronic devices 101, 102, and 104 in FIG. 1) through a network by using the communication module 340. For example, the external display device 201 may perform wireless communication with the electronic device 101 and exchange an instruction and/or data with each other. According to some embodiments, the external display device 201 may be at least partially controlled by an external electronic device (e.g., the electronic device 101) through the communication module 340. For example, the external display device 201 may perform at least one function under control of another electronic device outside. According to an embodiment, the external display device 201 may transmit object information (e.g., an image) located in actual real space, distance information to the object, user's gaze information, and/or user's gesture information acquired through the camera module 370 to an external device (e.g., the server 201 and/or other electronic devices 101, 102, and 104 in FIG. 1) through the communication module 340.

According to an embodiment, the communication module 340 may include an antenna module 345. For example, the communication module 340 may support various technologies (e.g., beamforming, multiple input/output (MIMO), and/or an array antenna) to secure performance in a designated frequency band. According to an embodiment, the antenna module 345 may transmit/receive a signal or power to/from the outside (e.g., a peripheral device of the external display device 201 and/or a server). According to some embodiments, the antenna module 345 may include multiple antennas (e.g., array antennas). According to an embodiment, a signal or power may be transmitted/received between the communication module 340 and the outside through the antenna module 345.

The memory 350 may correspond to the memory 130 described above with reference to FIG. 1. According to an embodiment, the memory 350 may store various data used by the external display device 201 when the external display device 201 provides the AR service. The data may include, for example, software (e.g., the program 140 in FIG. 1) and input data or output data with respect to a command related to the software. The memory 350 may store instructions causing the processor 390 to operate. The instructions may be stored as software in the memory 350 and may be executable by the processor 390.

The audio module 360 may convert a sound into an electrical signal or an electrical signal into a sound, based on control of the processor 390.

The camera module 370 may include at least one camera. According to an embodiment, the camera module 370 may include at least one of a shooting camera, an eye tracking camera, or a recognition camera.

The battery 380 may supply power to at least one component of the external display device 201. The battery 380 may include multiple batteries. For example, the battery 380 may include a first battery configured to supply power in a first support frame (e.g., the first support frame 260 in FIG. 2) and a second battery configured to supply power in a second support frame (e.g., the second support frame 270 in FIG. 2).

The processor 390 may execute a program (e.g., the program 140 in FIG. 1) stored in the memory 350 to control at least one other component (e.g., a hardware or software component) and perform various data processes or operations. The processor 390 may operates to provide the AR service to the user based on the external display device 201 alone or connection with the electronic device 101. Here, the connection may represent pairing of the external display device 201 to the electronic device 101 through near-field wireless communication (e.g., Bluetooth). The processor 390 may output at least one virtual object (or virtual information) so that at least one virtual object is added and displayed in the actual real space corresponding to the gaze (e.g., FOV and angle of view (AOV)) of the user wearing the external display device 201 through the display module 320.

According to an embodiment, the processor 390 may correspond to the processor 120 described above with reference to FIG. 1. According to an embodiment, the processor 390 may execute an application (e.g., an AR application) (e.g., the application 146 in FIG. 1) to control a peripheral device connected to the external display device 201 through a data communication link on an AR screen and perform various data processes and operations associated with the AR service. According to an embodiment, as at least a portion of the data processes and operations, the processor 390 may store, in the memory 350, data received through the communication module 340, process the data stored in the memory 350, and store result data in the memory 350 and/or transmit the result data to a peripheral device (e.g., the electronic device 101). According to an embodiment, the processor 390 may control the display module 320 to superimpose various digital contents (e.g., an AR image) on the real world provided through the display module 320 to display one image (e.g., an AR screen).

According to an embodiment, the processor 390 may be included in one of the first support frame 260 or the second support frame 270 of the external display device 201 and operate. According to some embodiments, the processor 390 may include a first processor (e.g., a main processor) and a second processor (e.g., an auxiliary processor) in the first support frame 260 and the second support frame 270 of the external display device 201, respectively, and may include a dual system structure operating in sync with the first processor and the second processor.

An electronic device (e.g., the electronic device 101 in FIG. 1) according to an embodiment of the disclosure may include a camera module (e.g., the camera module 180 in FIG. 1), a communication module (e.g., the communication module 190 in FIG. 1), a display (e.g., the display module 160 in FIG. 1), a memory (e.g., the memory 130 in FIG. 1), and a processor (e.g., the processor 120 in FIG. 1) operatively connected to at least one of the camera module, the communication module, the display, or the memory, wherein the processor is configured to acquire, based on a request for connection with an external display device (e.g., the external display device 201 in FIG. 2), a face image of a user through the camera module in a state in which the external display device is worn, perform face authentication by comparing the acquired face image with face information stored in the memory, display, on the display, an authentication code associated with the external display device associated with the stored face information, when the face authentication is completed, receive a request for communication connection with the electronic device from the external display device 201 through the communication module based on the authentication result of the authentication code in the external display device 201, and establish connection with the external display device 201 in response to the request.

In a security area of the memory, the user's face information and the user's iris information may be stored in association with the device information of the external display device.

The processor may be configured to analyze the acquired face image to extract face feature information and determine whether the extracted face feature information substantially matches the face information stored in the security area.

The processor may determine, in case that the extracted face feature information substantially matches the face information stored in the security area, that the face authentication has succeeded, and determine, in case that the extracted face feature information does not substantially match the face information stored in the security area, that the face authentication has failed.

The processor may be configured to generate the authentication code based on the device information of the external display device stored in the security area of the memory in response to the stored face information.

The authentication code may correspond to a service set identifier (SSID) of the external display device corresponding to the stored face information and an SSID of the electronic device, encrypted with a public key of the external display device.

The processor may be configured to receive a request for communication connection with the electronic device from the external display device through the SSID of the electronic device included in the authentication code, the external display device making the request by authenticating the displayed authentication code.

The processor may be configured to identify the iris information stored in the security area of the memory in response to the stored face information, receive an iris image from the external display device through the communication channel established with the external display device, and compare the identified iris information with the received iris image to perform iris authentication.

The processor may be configured to determine, in case that iris feature information extracted from the iris image substantially matches the identified iris information, that the iris authentication of the user has succeeded and in case that the iris authentication has succeeded, complete connection with the external display device.

The processor may be configured to determine, in case that iris feature information extracted from the iris image does not substantially match the identified iris information, that the iris authentication of the user has failed, request, in case that the iris authentication of the user has failed, an iris image acquired by recapturing the iris of the user from the external display device, and receive the iris image acquired by recapturing the iris of the user according to the request and perform the iris authentication again.

An electronic device (e.g., the external display device 201 in FIG. 2) according to an embodiment of the disclosure may include a camera module (e.g., the camera module 370 in FIG. 3), a communication module (e.g., the communication module 340 in FIG. 3), a display (e.g., the display module 320 in FIG. 3), a memory (e.g., the memory 350 in FIG. 3), and a processor (e.g., the processor 390 in FIG. 3) operatively connected to at least one of the camera module, the communication module, the display, or the memory, wherein the processor is configured to detect whether the electronic device is worn on a user, capture an authentication code displayed on a display (e.g., the display module 160 in FIG. 1) of an external electronic device (e.g., the electronic device 101 in FIG. 1) through the camera module in a state in which the electronic device is worn on the user, authenticate the authentication code to extract device information of the external electronic device from the authentication code, transmit a request for connection with the external electronic device through the communication module based on the extracted device information, and establish connection with the external electronic device in response to the request.

The processor may be configured to capture, in case that the face authentication of the user has succeeded by the external electronic device in a state in which the user is wearing the electronic device, the authentication code.

The authentication code may correspond to an SSID of the electronic device corresponding to the authenticated face information of the user and an SSID of the external electronic device, encrypted with a public key of the electronic device.

The processor may be configured to decrypt the authentication code with a private key of the electronic device to extract the SSID of the electronic device and the SSID of the external electronic device from the authentication code.

The processor may be configured to request, in case that the SSID of the electronic device extracted from the authentication code matches the SSID stored in the memory, communication connection with the external electronic device through the SSID of the external electronic device extracted from the authentication code.

The processor may be configured to capture the iris of the user through the camera module to acquire an iris image, receive iris information corresponding to the authenticated face information of the user from the external electronic device, and compare the acquired iris image with the received iris information so as to perform the iris authentication.

The processor may be configured to determine, in case that iris feature information extracted from the iris image substantially matches the received iris information, that the iris authentication of the user has succeeded and in case that the iris authentication has succeeded, complete connection with the external electronic device.

The processor may be configured to determine, in case that iris feature information extracted from the iris image does not substantially match the received iris information, that the iris authentication of the user has failed, recapture, in case that the iris authentication has failed, the iris of the user to acquire an iris image, and compare the acquired iris image with the received iris information to perform the iris authentication again.

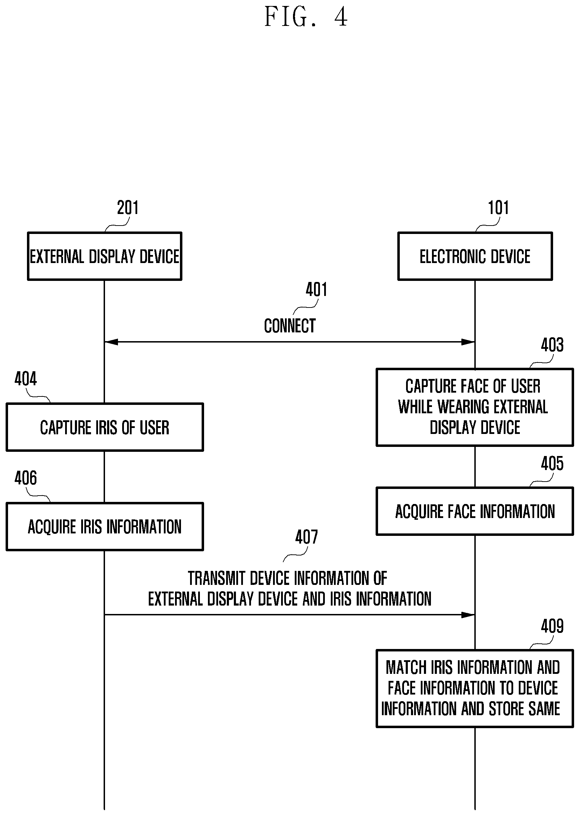

FIG. 4 is a signal flow illustrating a method for matching biometric information of an electronic device and an external display device according to an embodiment.

In the following embodiment, respective operations may be sequentially performed, but are not necessarily sequentially performed. For example, the sequential position of each operation may be changed, or at least two operations may be performed in parallel.

Referring to FIG. 4, in operation 401, an electronic device (e.g., the electronic device 101 in FIG. 1) according to an embodiment may be connected to an external display device (e.g., the external display device 201 in FIG. 2). Here, the connection may represent pairing of the electronic device 101 with the external display device 201 through a near-field wireless communication. The external display device 201 (or a wearable display device) may include a glasses-shaped display and may include various shaped devices which may be worn on a portion of the user's body and display a content. For example, in case that the electronic device 101 is initially connected to the external display device 201, the connection may be established using a conventional method. For example, in the conventional connection method, the electronic device 101 may execute an application (e.g., the application 146 in FIG. 1) for connection with the external display device 201 based on a user's input and an ID of the external display device 201 may be identified by the executed application. The electronic device 101 may, in case that the identified ID of the external display device 201 is selected, receive a pass code displayed on the external display device 201 from a user. The electronic device 101 may, in case that the input pass code is identified, establish connection with the external display device 201.

Hereinafter, operations 403 to 409 may be performed by an application for connection between the electronic device 101 and the external display device 201.

In operation 403, the electronic device 101 may capture the user's face in a state in which the external display device 201 is worn. Whereas in the conventional art, to authenticate a user's face, it was necessary to capture an image while the external display device 201 was not being worn (e.g., when the external display device 201 was removed), the disclosure enables face authentication of the user while the external display device 201 is being worn. The electronic device 101 may drive a camera (e.g., the camera module 180 in FIG. 1) in a state in which the user is wearing the external display device 201 to capture the user's face.

In operation 405, the electronic device 101 may acquire face information based on the captured face image. The face information may include face feature information (e.g., a face feature value) of the user. The electronic device 101 may analyze the captured face image to acquire the face information.

In operation 404, the external display device 201 may capture an iris of the user. The external display device 201 may drive a camera module (e.g., the camera module 370 in FIG. 3) to capture the iris of the user.

In operation 406, the external display device 201 may acquire iris information based on the captured iris image. The iris information may include iris feature information (e.g., an iris feature value) of the user. The external display device 201 may analyze the captured iris image to acquire the iris information. According to an embodiment, the external display device 201 may transmit the captured iris image to the electronic device 101 (not shown), and the electronic device 101 may acquire the iris information based on the iris image.

Operations 403 and 405 may be performed in parallel with operations 404 and 406, or may be performed sequentially. For example, operations 403 and 405 may be performed before operations 404 and 406, or after operations 404 and 406. This is merely an implementation issue and the disclosure is not limited thereto.

In operation 407, the external electronic device 201 may transmit the device information of the external display device 201 and the iris information acquired in operation 406 to the electronic device 101. The device information may include a public key of the external display device 201 and a service set identifier (SSID) of the external display device 201. The device information may be required to match the external display device 201 to the iris information and the face information. The external display device 201 is connected to the electronic device 101 and thus may transmit the device information and the iris information to the electronic device 101 through a configured communication channel (or communication session).

In operation 409, the electronic device 101 may match the iris information and the face information to the device information and store same. The electronic device 101 may receive the iris information and the face information from the external display device 201 through a communication module (e.g., the communication module 190 in FIG. 1). The electronic device 101 may pair the acquired iris and face information for a single user with the device information of the external display device 201 and store same in a memory (e.g., the memory 130 in FIG. 1). According to an embodiment, the electronic device 101 may store one or more of iris information and face information with respect to a single user. The electronic device 101 may store the iris information and the face information paired with the device information in a security area (e.g., a secure world) of the memory 130.

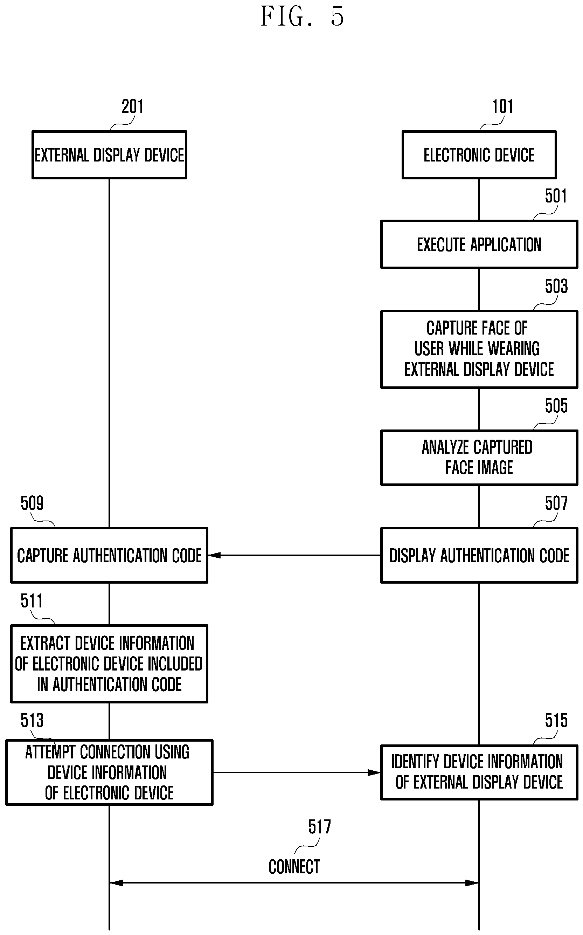

FIG. 5 is a signal flow illustrating a method for connecting an electronic device and an external display device according to an embodiment. FIG. 5 may be performed when the electronic device and the external display device are connected to each other after performing the flowchart of FIG. 4 at least once.

In the following embodiment, respective operations may be sequentially performed, but are not necessarily sequentially performed. For example, the sequential position of each operation may be changed, or at least two operations may be performed in parallel.

Referring to FIG. 5, in operation 501, an electronic device (e.g., the electronic device 101 in FIG. 1) according to an embodiment may execute an application (e.g., the application 146 in FIG. 1) for connection with an external display device (e.g., the external display device 201 in FIG. 2). The electronic device 101 may receive a request for execution of the application and execute the application from the user.

In operation 503, the electronic device 101 may capture the user's face in a state in which the user is wearing the external display device 201. For example, in case that connection with the external display device 201 is requested through the executed application, the electronic device 101 may drive a camera (e.g., the camera module 180 in FIG. 1) to capture the user's face. When capturing the user's face, the user may be in a state of wearing the external display device 201.

In operation 505, the electronic device 101 may analyze the captured face image. The electronic device 101 may analyze the captured face image to extract face feature information. The electronic device 101 may determine whether the extracted face feature information matches face information stored in a security area of a memory (e.g., the memory 130 in FIG. 1). In the security area of the memory 130, the iris information and the face information may be paired with the device information of the external display device 201 and stored. The electronic device 101 may determine whether the extracted face feature information substantially matches the face information stored in the security area.

In operation 507, the electronic device 101 may display an authentication code on a display (e.g., the display module 160 in FIG. 1). In case that the extracted face feature information substantially matches the face information stored in the security area, the electronic device 101 may generate an authentication code. The authentication code may correspond to a code required for the electronic device 101 to authenticate the external display device 201. The authentication code may be generated as an encryption code (e.g., a quick response (QR) code or barcode). The authentication code may correspond to an SSID of the external display device 201 corresponding to the face information and an SSID of the electronic device 101, encrypted with a public key of the external display device 201. The electronic device 101 may display the generated authentication code on the display (e.g., the display module 160 in FIG. 1).

In operation 509, the external display device 201 may capture the authentication code. The user may capture the authentication code displayed on the electronic device 101 by using the external display device 201 while wearing the external display device 201. For example, the external display device 201 may execute an application for connection with the electronic device 101 and execute a camera module (e.g., the camera module 370 in FIG. 3) by the executed application. The camera module 370 may correspond to a shooting camera configured to capture the front of the external display device 201.

In operation 511, the external display device 201 may extract device information of the electronic device 101 included in the authentication code. The external display device 201 may decrypt the captured authentication code with a private key of the external display device 201. The authentication code is encrypted with the public key of the external display device 201 and thus may be decrypted with the private key of the external display device 201. The external display device 201 may decrypt the authentication code to extract device information of the electronic device 101 included in the authentication code. The external display device 201 may decrypt the authentication code to extract the SSID of the external display device 201 and the SSID of the electronic device 101. The device information of the electronic device 101 may include the SSID of the electronic device 101.

In operation 513, the external electronic device 201 may attempt connection with the electronic device 101 based on the device information of the electronic device 101. The external display device 201 may determine whether the SSID thereof matches the SSID of the external display device 201 extracted from the authentication code. In case that the SSID of the external display device matches the SSID of the external display device 201 extracted from the authentication code, the external display device 201 may request to establish a communication channel through the SSID of the electronic device 101.

In operation 515, the electronic device 101 may identify the device information of the external display device 201. The electronic device 101 may identify, in case that establishing of a communication channel has been requested from the external display device 201, an SSID of the external display device 201 corresponding to the face information. The electronic device 101 may determine whether the SSID of the external display device 201 having requested the establishment of a communication channel matches the SSID of the external display device 201 corresponding to the face information. The electronic device 101 may permit, in case that the SSID of the external display device 201 having requested the establishment of a communication channel matches the SSID of the external display device 201 corresponding to the face information, connection with the external display device 201 having requested the establishment of a communication channel.

According to an embodiment, the electronic device 101 may display the authentication code and then wait for connection with the external display device 201 for a configured time (e.g., 1 minute or 5 minutes). The electronic device 101 may determine whether establishment of a communication channel is requested from the external display device 201 within the configured time. The electronic device 101 may determine, in case that establishment of a communication channel has been requested from the external display device 201 within the configured time, whether the SSID of the external display device 201 having requested the establishment of a communication channel matches the SSID of the external display device 201 corresponding to the face information. The electronic device 101 may disapprove, in case that establishment of a communication channel has been requested from the external display device 201 after the configured time has been elapsed, connection with the external display device 201 having requested the establishment of a communication channel.

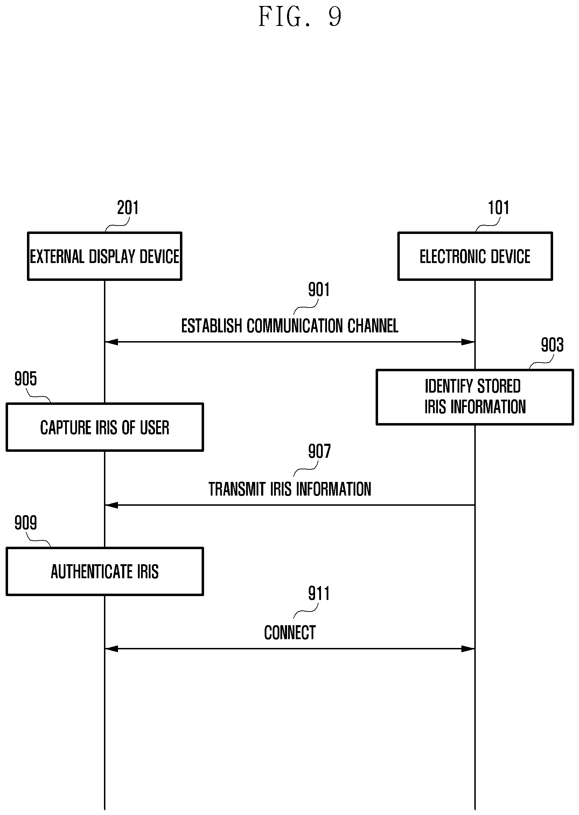

In operation 517, the electronic device 101 may establish connection with the external display device 201. The electronic device 101 may display (or output), in case that the face authentication is performed in a state in which the user is wearing the external display device 201 and the face authentication has succeeded (or has been completed), the authentication code to perform a connection operation with the external display device 201. According to an embodiment, the electronic device 101 may authenticate the iris of the user wearing the external display device 201 before the connection with the external display device 201 (e.g., after operation 515). The electronic device 101 may connect, in case that both the face authentication and the iris authentication have succeeded (or have been completed) in a state in which the user is wearing the external display device 201, to the external display device 201. The iris authentication method will be described in detail below with reference to FIGS. 9 to 12.

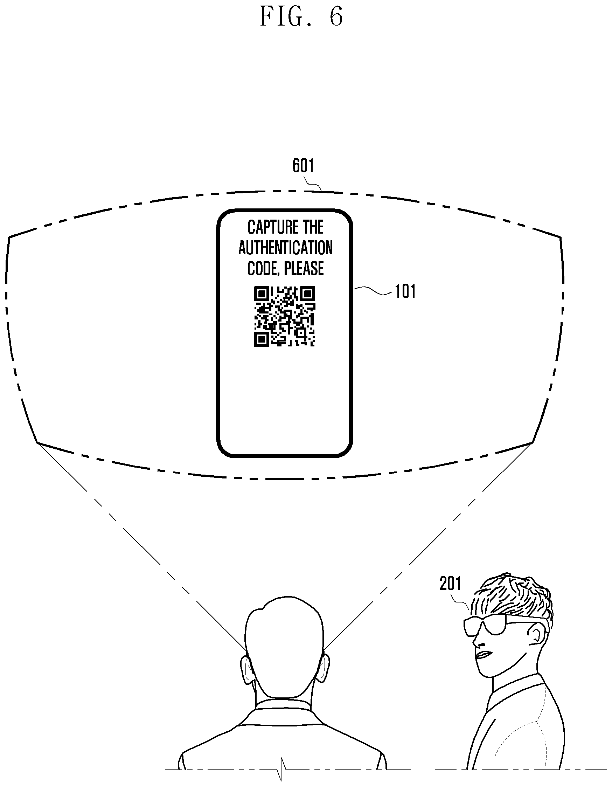

FIG. 6 is a view illustrating an example of recognizing an authentication code displayed on an electronic device through an external display device according to an embodiment.

Referring to FIG. 6, the user may capture an authentication code displayed on the electronic device (e.g., the electronic device 101 in FIG. 1) in a state of wearing an external display device (e.g., the external display device 201 in FIG. 2). Reference numeral 601 may represent the line of sight of the user wearing the external display device 201, or may be captured by a camera (e.g., the camera module 370 in FIG. 3) of the external display device 201. The external display device 201 may capture and recognize the authentication code displayed on the electronic device 101 for connection with the electronic device 101.

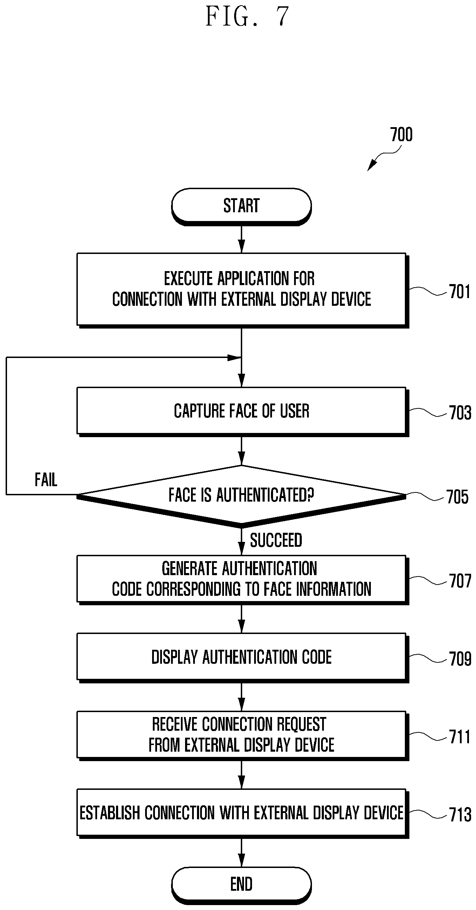

FIG. 7 is a flowchart 700 illustrating an operation method of an electronic device according to an embodiment.

In the following embodiment, respective operations may be sequentially performed, but are not necessarily sequentially performed. For example, the sequential position of each operation may be changed, or at least two operations may be performed in parallel.

According to an embodiment, it may be understood that operations 701 to 713 are performed by a processor (e.g., the processor 120 in FIG. 1) of the electronic device (e.g., the electronic device 101 in FIG. 1).

Referring to FIG. 7, in operation 701, a processor (e.g., the processor 120 in FIG. 1) of the electronic device (e.g., the electronic device 101 in FIG. 1) according to an embodiment may execute an application (e.g., the application 146 in FIG. 1) for connection with an external display device (e.g., the external display device 201 in FIG. 2). The external display device 201 (or a wearable display device) may include a glasses-shaped display and may include various shaped devices which may be worn on a portion of the user's body and display a content. Operation 701 may be performed after the electronic device 101 has connected to the external display device 201 at least once. The processor 120 may receive a request for execution of the application and execute the application from the user.

In operation 703, the processor 120 may capture the face of the user by using a camera (e.g., the camera module 180 in FIG. 1). The processor 120 may capture the face of the user through the camera module 180 in a state in which the user is wearing the external display device 201. The processor 120 may acquire a face image of the user in a state in which the user is wearing the external display device 201.

In operation 705, the processor 120 may authenticate the face. The processor 120 may compare the acquired face image of the user with face information stored in a security area of a memory (e.g., the memory 130 in FIG. 1). The processor 120 may extract face feature information from the acquired face image of the user. The processor 120 may determine whether the extracted face feature information corresponds to the face information stored in the security area. In the security area, the iris information and the face information may be paired with the device information (e.g., a public key and an SSID) of the external display device 201 and stored. The processor 120 may determine whether the extracted face feature information substantially matches the face information stored in the security area.

The processor 120 may determine, in case that the extracted face feature information substantially matches the face information stored in the security area, that the face authentication has succeeded and perform operation 707. The processor 120 may determine, in case that the extracted face feature information does not substantially match the face information stored in the security area, that the face authentication has failed and return to operation 703. When returning to operation 703, the processor 120 may recapture the face of the user. According to an embodiment, the processor 120 may end the operation in case that the face authentication fails even after performing the face authentication a configured number of times (e.g., 3 times, 5 times, or the like).

In case that the face authentication succeeds, in operation 707, the processor 120 may generate an authentication code corresponding to the face information. The authentication code may correspond to a code required for the electronic device 101 to authenticate the external display device 101. The authentication code may be generated as an encryption code (e.g., a QR code or barcode). The authentication code may correspond to an SSID of the external display device 201 corresponding to the face information and an SSID of the electronic device 101, encrypted with a public key of the external display device 201.

According to an embodiment, the processor 120 may generate the authentication code in advance and store the authentication code in the security area of the memory 130. The processor 120 may store the generated authentication code in response to the face information. The processor 120 may omit operation 707 in case that the authentication code is stored in the security area in response to the face information. In addition, the processor 120 may perform, in case that the authentication code is stored in the security area in response to the face information, an operation of identifying the authentication code stored in the security area instead of an operation of generating the authentication code. This is merely an implementation issue and the disclosure is not limited to the description.

In operation 709, the processor 120 may display the generated authentication code on the display (e.g., the display module 160 in FIG. 1). The processor 120 may display the authentication code to cause the external display device 201 to recognize the authentication code. The external display device 201 may capture the authentication code to extract device information of the electronic device 101 included in the authentication code. The authentication code is encrypted with the public key of the external display device 201 and thus may be decrypted with the private key of the external display device 201. The external display device 201 may decrypt the authentication code to extract device information of the electronic device 101 included in the authentication code. The external display device 201 may decrypt the authentication code to extract the SSID of the external display device 201 and the SSID of the electronic device 101. The device information of the electronic device 101 may include the SSID of the electronic device 101. The external electronic device 201 may attempt connection with the electronic device 101 based on the device information of the electronic device 101. The external display device 201 may request establishment of a communication channel by using the SSID of the electronic device 101.

In operation 711, the processor 120 may receive a connection request from the external display device 201. The processor 120 may receive the connection request from the external display device 201 through a communication module (e.g., the communication module 190 in FIG. 1). The processor 120 may identify, in case that establishing of a communication channel has been requested from the external display device 201, an SSID of the external display device 201 corresponding to the face information. The processor 120 may determine whether the SSID of the external display device 201 having requested the establishment of a communication channel matches the SSID of the external display device 201 corresponding to the face information. The processor 120 may permit, in case that the SSID of the external display device 201 having requested the establishment of a communication channel matches the SSID of the external display device 201 corresponding to the face information, connection with the external display device 201 having requested the establishment of a communication channel.

According to an embodiment, the processor 120 may display the authentication code and then wait for connection with the external display device 201 for a configured time (e.g., 1 minute or 5 minutes). The processor 120 may determine whether establishment of a communication channel is requested from the external display device 201 within the configured time. The processor 120 may determine, in case that establishment of a communication channel has been requested from the external display device 201 within the configured time, whether the SSID of the external display device 201 having requested the establishment of a communication channel matches the SSID of the external display device 201 corresponding to the face information. The processor 120 may disapprove, in case that establishment of a communication channel has been requested from the external display device 201 after the configured time has been elapsed, connection with the external display device 201 having requested the establishment of a communication channel.

In operation 713, the processor 120 may establish connection with the external display device 201. The processor 120 may display (or output), in case that the face authentication is performed in a state in which the user is wearing the external display device 201 and the face authentication has succeeded (or has been completed), the authentication code to perform a connection operation with the external display device 201. According to an embodiment, the processor 120 may authenticate the iris of the user wearing the external display device 201 before the connection with the external display device 201 (e.g., after operation 711). The processor 120 may connect, in case that both the face authentication and the iris authentication have succeeded (or have been completed) in a state in which the user is wearing the external display device 201, to the external display device 201. The iris authentication method will be described below with reference to FIGS. 9 to 12.

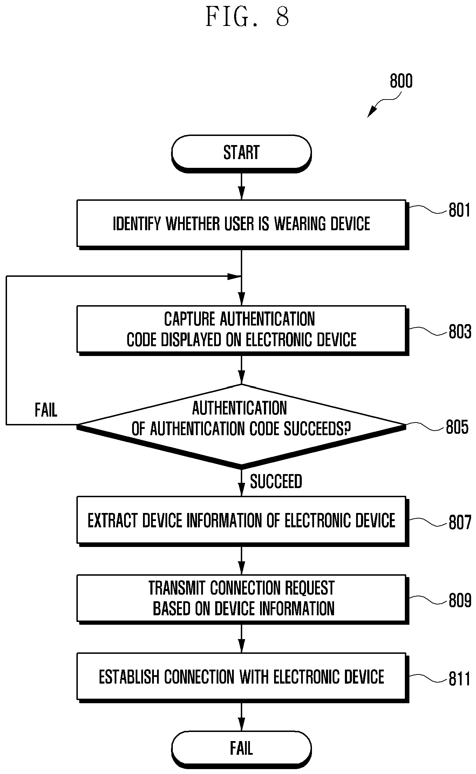

FIG. 8 is a flowchart 800 illustrating an operation method of an external display device according to an embodiment.

In the following embodiment, respective operations may be sequentially performed, but are not necessarily sequentially performed. For example, the sequential position of each operation may be changed, or at least two operations may be performed in parallel.

According to an embodiment, it may be understood that operations 801 to 811 are performed by a processor (e.g., the processor 390 in FIG. 3) of an electronic device (e.g., the external display device 201 in FIG. 2).

Referring to FIG. 8, in operation 801, a processor (e.g., the processor 390 in FIG. 2) of an external display device (e.g., the external display device 201 in FIG. 3) according to an embodiment may identify whether the user is wearing the external display device. For example, the processor 390 may determine whether the user is wearing the external display device 201 through a sensor module (e.g., the sensor module 330 in FIG. 3). The processor 390 may determine whether the user is wearing the external display device 201 based on a sensing value acquired from the sensor module 330.

In operation 803, the processor 390 may capture the authentication code displayed on the electronic device (e.g., the electronic device 101 in FIG. 1). The user may capture the authentication code displayed on the electronic device 101 by using the external display device 201 while wearing the external display device 201. For example, the processor 390 may execute, based on a user input, an application for connection with the electronic device 101 and execute a camera module (e.g., the camera module 370 in FIG. 3) by the executed application. The camera module 370 may correspond to a shooting camera configured to capture the front of the external display device 201.

In operation 805, the processor 390 may determine whether authentication of the authentication code has succeeded. The authentication code is encrypted with the public key of the external display device 201 and thus may be decrypted with the private key of the external display device 201. The processor 390 may decrypt the authentication code with a private key of the external display device 201. The processor 390 may determine, in case that the authentication code is decrypted with the private key of the external display device 201, that the authentication has succeeded and perform operation 807. Alternatively, the processor 390 may determine whether the SSID of the processor matches the SSID of the external display device 201 extracted from the authentication code. The processor 390 may determine, in case that the SSID of the processor matches the SSID of the external display device 201 extracted from the authentication code, that the authentication has succeeded.

The processor 390 may determine, in case that the authentication code is not decrypted with the private key of the external display device 201, that the authentication has failed and return to operation 803. Alternatively, the processor 390 may determine, in case that the SSID (e.g., the SSID stored in the memory of the external display device 201) of the processor does not match the SSID of the external display device 201 extracted from the authentication code, that the authentication has failed. In case of returning to operation 803, the processor 390 may recapture the authentication code displayed on the electronic device 101. According to an embodiment, the processor 390 may end, in case that the authentication code displayed on the electronic device 101 is not authenticated within a configured number of times, the connection operation with the electronic device 101.

In case that the authentication of the authentication code has succeeded, in operation 807, the processor 390 may extract device information of the electronic device 101 included in the authentication code. The processor 390 may decrypt the authentication code to extract the SSID of the external display device 201 and the SSID of the electronic device 101. The device information of the electronic device 101 may include the SSID of the electronic device 101.

In operation 809, the processor 390 may transmit a connection request to the electronic device 101, based on the device information of the electronic device 101. The processor 390 may request (or attempt) connection (e.g., establishment of a communication channel) with the electronic device 101 with the SSID of the electronic device 101 through a communication module (e.g., the communication module 340 in FIG. 3). The electronic device 101 may display the authentication code and then wait for connection with the external display device 201 for a configured time (e.g., 1 minute or 5 minutes). The electronic device 101 may determine whether the connection request has been received from the external display device 201 within the configured time. The electronic device 101 may determine, in case that the connection request has been received from the external display device 201 within the configured time, whether the SSID of the external display device 201 having requested the connection matches the SSID of the external display device 201 corresponding to the face information. The electronic device 101 may permit, in case that the SSID of the external display device 201 having requested the connection matches the SSID of the external display device 201 corresponding to the face information, connection with the external display device 201 having requested the connection. The electronic device 101 may disapprove, in case that establishment of a communication channel has been requested from the external display device 201 after the configured time has been elapsed, connection with the external display device 201 having requested the establishment of a communication channel.

In operation 811, the processor 390 may establish connection with the electronic device 101. The processor 390 may establish connection with the electronic device 101 in case that the electronic device 101 permits the connection request. According to an embodiment, the processor 390 may authenticate the iris of the user wearing the external display device 201 before the connection with the electronic device 101 (e.g., before operation 811). The processor 390 may connect, in case that both the face authentication and the iris authentication have succeeded (or have been completed) in a state in which the user is wearing the external display device 201, to the electronic device 101. The iris authentication method will be described below with reference to FIGS. 9 to 12.

FIG. 9 is a signal flow illustrating a method for iris authentication before an electronic device and an external display device are connected according to an embodiment. FIG. 9 may be performed before operation 517 in FIG. 5 or included in operation 517 and performed.

In the following embodiment, respective operations may be sequentially performed, but are not necessarily sequentially performed. For example, the sequential position of each operation may be changed, or at least two operations may be performed in parallel.

Referring to FIG. 9, in operation 901, a communication channel between an electronic device (e.g., the electronic device 101 in FIG. 1) according to an embodiment and an external display device (e.g., the external display device 201 in FIG. 2) may be established. The electronic device 101 may establish a communication channel with the external display device 201 before connection (e.g., pairing) with the external display device 201. The communication channel establishment may be for exchanging of iris information for the iris authentication.

In operation 903, the electronic device 101 may identify iris information stored in a security area of a memory (e.g., the memory 130 in FIG. 1). The electronic device 101 may identify the iris information corresponding to the face information of which face authentication has succeeded in a state in which the user is wearing the external display device 201.

In operation 905, the external display device 201 may capture an iris of the user. Since the user is wearing the external display device 201, the external display device 201 may capture the iris of the user by using an eye tracking camera (e.g., the camera module 370 in FIG. 3) for identifying the direction of the user's gaze. The external display device 201 may capture the iris of the user and acquire an iris image of the user.

In the drawing, operation 903 is described as being performed before operation 905, but operations 903 and 905 may be performed in parallel, or operation 903 may be performed after operation 905 is performed first. This is merely an implementation issue and the description does not limit the disclosure.

In operation 907, the electronic device 101 may transmit the identified iris information through a communication module (e.g., the communication module 190 in FIG. 1). The electronic device 101 may transmit the iris information to the external display device 201 through a communication channel established in the external display device 201. Operation 907 may be performed while operation 905 is being performed.

In operation 909, the external display device 201 may authenticate the iris. For example, the external display device 201 may receive the iris information from the electronic device 101 through a communication module (e.g., the communication module 340 in FIG. 3). The external display device 201 may analyze the acquired iris image to extract iris feature information. The external display device 201 may compare the iris feature information extracted from the iris image with the received iris information to authenticate the iris of the user.

In operation 911, in case that the authentication of the iris of the user has been completed, the electronic device 101 and the external display device 201 may be connected to each other. The external display device 201 may transmit an iris authentication result (e.g., authentication success) to the electronic device 101 and when the iris authentication result has been received, the electronic device 101 may permit the connection with the external display device 201.

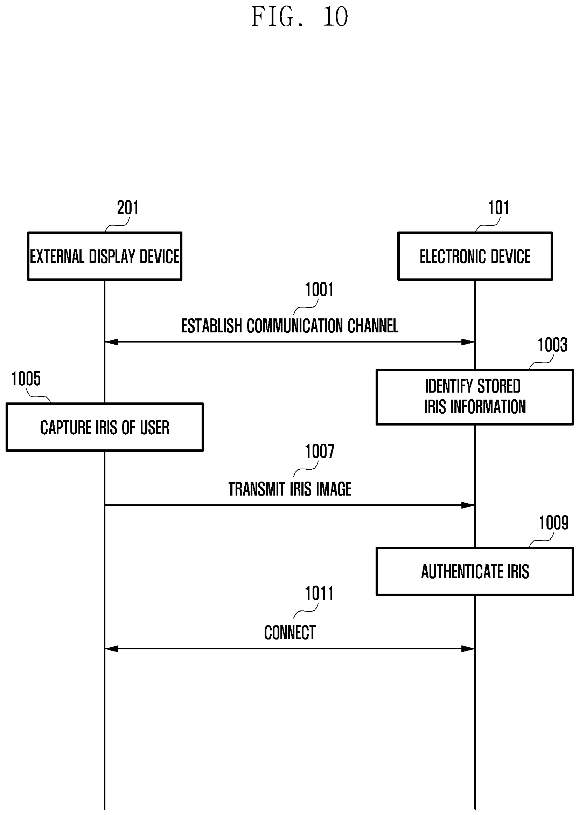

FIG. 10 is a signal flow illustrating a method for iris authentication before an electronic device and an external display device are connected according to an embodiment. FIG. 10 may be performed before operation 517 in FIG. 5 or included in operation 517 and performed.

In the following embodiment, respective operations may be sequentially performed, but are not necessarily sequentially performed. For example, the sequential position of each operation may be changed, or at least two operations may be performed in parallel.

Referring to FIG. 10, in operation 1001, a communication channel between an electronic device (e.g., the electronic device 101 in FIG. 1) according to an embodiment and an external display device (e.g., the external display device 201 in FIG. 2) may be established. The electronic device 101 may establish a communication channel with the external display device 201 before connection (e.g., pairing) with the external display device 201. The communication channel establishment may be for exchanging of iris information for the iris authentication. Operation 1001 may be identical or similar to operation 901 in FIG. 9.

In operation 1003, the electronic device 101 may identify iris information stored in a security area of a memory (e.g., the memory 130 in FIG. 1). The electronic device 101 may identify the iris information corresponding to the face information of which face authentication has succeeded in a state in which the user is wearing the external display device 201. Operation 1003 may be identical or similar to operation 903 in FIG. 9.

In operation 1005, the external display device 201 may capture an iris of the user. Since the user is wearing the external display device 201, the external display device 201 may capture the iris of the user by using an eye tracking camera (e.g., the camera module 370 in FIG. 3) for identifying the direction of the user's gaze. The external display device 201 may capture the iris of the user and acquire an iris image of the user. Operation 1005 may be identical or similar to operation 905 in FIG. 9.

In the drawing, operation 1003 is described as being performed before operation 1005, but operations 1003 and 1005 may be performed in parallel, or operation 1003 may be performed after operation 1005 is performed first. This is merely an implementation issue and the description does not limit the disclosure.

In operation 1007, the external display device 201 may transmit the acquired iris image through a communication module (e.g., the communication module 370 in FIG. 3). The external display device 201 may transmit the iris image to the electronic device 101 through the communication channel established in the electronic device 101.

In operation 1009, the electronic device 101 may authenticate the iris. For example, the electronic device 101 may receive the iris image from the external display device 201 through a communication module (e.g., the communication module 190 in FIG. 1). The electronic device 101 may analyze the acquired iris image to extract iris feature information. The electronic device 101 may compare the iris feature information extracted from the iris image with the iris information stored in the security area of the memory 130 to authenticate the iris of the user.

In operation 1011, in case that the authentication of the iris of the user has been completed, the electronic device 101 and the external display device 201 may be connected to each other. The electronic device 101 may transmit an iris authentication result (e.g., authentication success) to the external display device 201 and when the iris authentication result has been received, the external display device 201 may permit the connection with the electronic device 101.

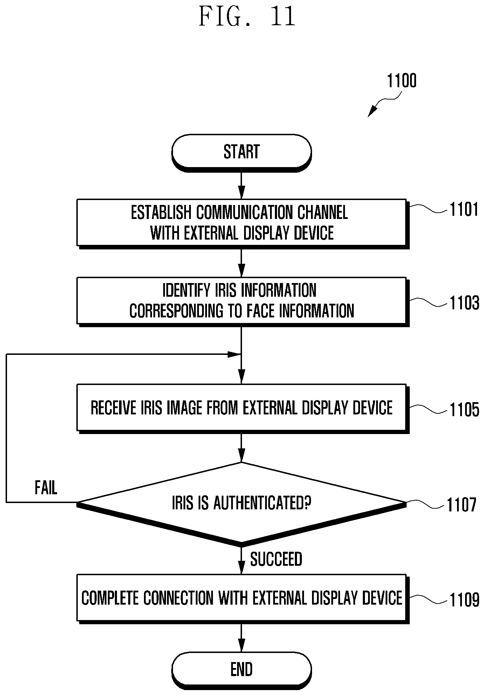

FIG. 11 is a flowchart 1100 illustrating an iris authentication method of an electronic device according to an embodiment. FIG. 11 may be performed before operation 713 in FIG. 7 or included in operation 713 in FIG. 7 and performed.

In the following embodiment, respective operations may be sequentially performed, but are not necessarily sequentially performed. For example, the sequential position of each operation may be changed, or at least two operations may be performed in parallel.

According to an embodiment, it may be understood that operations 1101 to 1109 are performed by a processor (e.g., the processor 120 in FIG. 1) of the electronic device (e.g., the electronic device 101 in FIG. 1).

Referring to FIG. 11, in operation 1101, a processor (e.g., the processor 120 in FIG. 1) of the electronic device (e.g., the electronic device 101 in FIG. 1) according to an embodiment may establish a communication channel with an external display device (e.g., the external display device 201 in FIG. 2). The processor 120 may establish a communication channel with the external display device 201 through a communication module (e.g., the communication module 190 in FIG. 1) before connection (e.g., pairing) with the external display device 201. The communication channel establishment may be for exchanging of iris information for the iris authentication.

In operation 1103, the processor 120 may identify the iris information corresponding to the face information. The processor 120 may identify iris information stored in a security area of a memory (e.g., the memory 130 in FIG. 1). The processor 120 may identify the iris information corresponding to the face information of which face authentication has succeeded in a state in which the user is wearing the external display device 201. The processor 120 may request an iris image acquired by capturing the iris of the user from the external display device 201.

In operation 1105, the processor 120 may receive an iris image from the external display device 201 through the communication module 190. The processor 120 may receive an iris image acquired by capturing the iris of the user according to the request.

In operation 1107, the processor 120 may authenticate the iris. The processor 120 may analyze the received iris image to extract iris feature information. The processor 120 may compare the iris feature information extracted from the iris image with the iris information stored in the security area of the memory 130 to authenticate the iris of the user. The processor 120 may determine, in case that the iris feature information substantially matches the stored iris information, that the authentication of the iris of the user has succeeded. The processor 120 may determine, in case that the iris feature information does not substantially match the stored iris information, that the authentication of the iris of the user has failed.

The processor 120 may perform, in case that the iris authentication has succeeded, operation 1109 and return, in case that the iris authentication has failed, to operation 1105. The processor 120 may return to operation 1105 to request an iris image acquired by recapturing the iris of the user from the external display device 201 and receive the iris image acquired by capturing the iris of the user according to the request.

In case that the iris authentication has succeeded, in operation 1109, the processor 120 may complete the connection with the external display device 201. The processor 120 may complete, in case that both the face authentication (e.g., operation 705 in FIG. 7) and the iris authentication (e.g., operation 1107) have succeeded, the connection with the external display device 201.

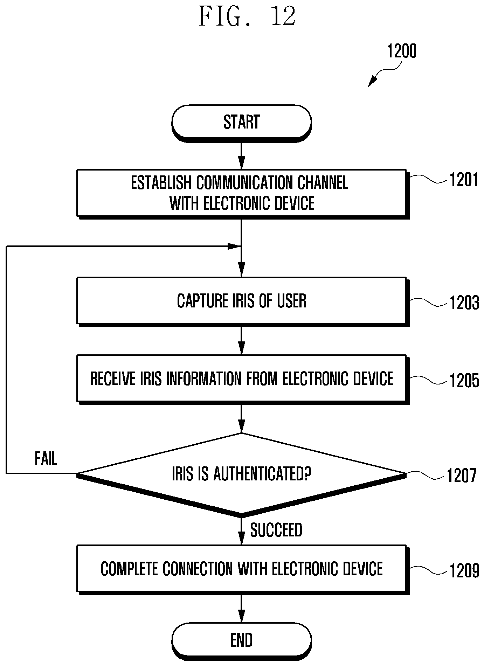

FIG. 12 is a flowchart 1200 illustrating an iris authentication method of an external display device according to an embodiment. FIG. 12 may be performed before operation 811 in FIG. 8 or included in operation 811 in FIG. 8 and performed.

In the following embodiment, respective operations may be sequentially performed, but are not necessarily sequentially performed. For example, the sequential position of each operation may be changed, or at least two operations may be performed in parallel.

According to an embodiment, it may be understood that operations 1201 to 1209 are performed by a processor (e.g., the processor 390 in FIG. 3) of an electronic device (e.g., the external display device 201 in FIG. 2).

Referring to FIG. 12, in operation 1201, a processor (e.g., the processor 390 in FIG. 3) of an external display device (e.g., the external display device 201 in FIG. 2) according to an embodiment may establish a communication channel with the electronic device (e.g., the electronic device 101 in FIG. 1). The processor 390 may request connection (e.g., establishment of a communication channel) with the electronic device 101 with the SSID of the electronic device 101 through a communication module (e.g., the communication module 340 in FIG. 3). The processor 390 may establish a communication channel with the electronic device 101 in response to the request before the connection (e.g., pairing) with the electronic device 101. The communication channel establishment may be for exchanging of iris information for the iris authentication.

In operation 1203, the processor 390 may capture the iris of the user. The processor 390 may capture the iris of the user by using an eye tracking camera (e.g., the camera module 370 in FIG. 3) for identifying the direction of the user's gaze. The processor 390 may capture the iris of the user and acquire an iris image of the user.

In operation 1205, the processor 390 may receive the iris information from the electronic device 101 through a communication module (e.g., the communication module 370 in FIG. 3). The iris information may be stored in a security area of the electronic device 101 and may be identified in response to the face information.

In operation 1207, the processor 390 may authenticate the iris. The processor 390 may analyze the acquired iris image to extract iris feature information. The processor 390 may compare the iris feature information extracted from the iris image with the received iris information to authenticate the iris of the user. The processor 390 may determine, in case that the iris feature information substantially matches the received iris information, that the authentication of the iris of the user has succeeded. The processor 390 may determine, in case that the iris feature information does not substantially match the received iris information, that the authentication of the iris of the user has failed.

The processor 390 may perform, in case that the iris authentication has succeeded, operation 1209 and return, in case that the iris authentication has failed, to operation 1203. The processor 390 may return to operation 1203, recapture the iris of the user, and acquire a captured iris image.

In case that the iris authentication has succeeded, in operation 1209, the processor 390 may complete the connection with the electronic device 101. The processor 390 may complete, in case that all the face authentication (e.g., operation 705 in FIG. 7), the authentication code authentication (e.g., operation 805 in FIG. 8), and the iris authentication (e.g., operation 1207) have succeeded, the connection with the electronic device 101.

An operation method of an electronic device according to an embodiment of the disclosure may include an operation of acquiring, based on a request for connection with an external display device, a face image of a user through a camera module of the electronic device in a state in which the external display device is worn, an operation of performing face authentication by comparing the acquired face image with face information stored in a memory of the electronic device, an operation of displaying, in case that the face authentication has been completed, on a display of the electronic device, an authentication code associated with the external display device associated with the stored face information, an operation of receiving a request for communication connection with the electronic device from the external display device through a communication module of the electronic device based on the authentication result of the authentication code in the external display device, an operation of comparing iris information stored in a security area of the memory in response to the authenticated face information so as to perform iris authentication, and an operation of establishing, when the iris authentication is completed, connection with the external display device.

In a security area of the memory, the user's face information and the user's iris information may be stored in association with the device information of the external display device.

The authentication code may correspond to an SSID of the external display device corresponding to the stored face information and an SSID of the electronic device, encrypted with a public key of the external display device.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

The various embodiments of the disclosure in this specification and drawings are merely specific examples presented to easily explain the technical idea of the disclosure and to help understand the disclosure, and are not intended to limit the scope of the disclosure. Therefore, the scope of the disclosure should be interpreted to include all changes or modifications derived from the technical idea of the disclosure, in addition to the embodiments disclosed herein.

## Claims

1. An electronic device comprising:
a camera module;
a communication module;
a display;
a memory; and
a processor operatively connected to at least one of the camera module, the communication module, the display, or the memory,
wherein the processor is configured to:
acquire, based on a request for connection with an external display device, a face image of a user through the camera module in a state in which the external display device is worn;
perform face authentication by comparing the acquired face image with face information stored in the memory;
in case that the face authentication is completed, display, on the display, an authentication code associated with the external display device associated with the stored face information;
receive a request for communication connection with the electronic device from the external display device through the communication module, based on an authentication result of the authentication code in the external display device; and
establish connection with the external display device, in response to the request.

2. The electronic device of claim 1, wherein, in a security area of the memory, the user's face information and the user's iris information are stored in association with device information of the external display device.

3. The electronic device of claim 2, wherein the processor is configured to:
analyze the acquired face image to extract face feature information; and
determine whether the extracted face feature information substantially matches the face information stored in the security area.

4. The electronic device of claim 3, wherein the processor is configured to:
in case that the extracted face feature information substantially matches the face information stored in the security area, determine that the face authentication has succeeded; and
in case that the extracted face feature information does not substantially match the face information stored in the security area, determine that the face authentication has failed.

5. The electronic device of claim 1, wherein the processor is configured to generate the authentication code, based on the device information of the external display device stored in the security area of the memory in association with the stored face information.

6. The electronic device of claim 1, wherein the authentication code is acquired by encrypting a service set identifier (SSID) of the external display device corresponding to the stored face information and an SSID of the electronic device with a public key of the external display device.

7. The electronic device of claim 1, wherein the processor is configured to receive a request for communication connection with the electronic device from the external display device through the SSID of the electronic device included in the authentication code, the external display device making the request by authenticating the displayed authentication code.

8. The electronic device of claim 1, wherein the processor is configured to:
identify the iris information stored in the security area of the memory in association with the stored face information;
receive an iris image from the external display device through the communication channel established with the external display device; and
compare the identified iris information with the received iris image to perform iris authentication.

9. The electronic device of claim 8, wherein the processor is configured to:
in case that iris feature information extracted from the iris image substantially matches the identified iris information, determine that the iris authentication of the user has succeeded; and
in case that the iris authentication has succeeded, complete connection with the external display device.

10. The electronic device of claim 8, wherein the processor is configured to:
in case that iris feature information extracted from the iris image does not substantially match the identified iris information, determine that the iris authentication of the user has failed;
in case that the iris authentication has failed, request an iris image acquired by recapturing the user's iris from the external display device; and
receive the iris image acquired by recapturing the user's iris according to the request and perform iris authentication again.

11. An electronic device comprising:
a camera module;
a communication module;
a display;
a memory; and
a processor operatively connected to at least one of the camera module, the communication module, the display, or the memory,
wherein the processor is configured to:
detect whether the electronic device is worn on a user;
capture an authentication code displayed on a display of an external electronic device through the camera module in a state in which the electronic device is worn on the user;
authenticate the authentication code to extract device information of the external electronic device from the authentication code;
transmit a request for connection with the external electronic device through the communication module, based on the extracted device information; and
establish connection with the external electronic device, in response to the request.

12. The electronic device of claim 11, wherein the processor is configured to, in case that face authentication of the user has succeeded by the external electronic device in a state in which the user is wearing the electronic device, capture the authentication code, and
wherein the authentication code is acquired by encrypting a service set identifier (SSID) of the electronic device corresponding to the authenticated face information of the user and an SSID of the external electronic device with a public key of the electronic device.

13. The electronic device of claim 12, wherein the processor is configured to:
decrypt the authentication code with a private key of the electronic device to extract the SSID of the electronic device and the SSID of the external electronic device from the authentication code; and
in case that the SSID of the electronic device extracted from the authentication code matches an SSID stored in the memory, request communication connection with the external electronic device through the SSID of the external electronic device extracted from the authentication code.

14. The electronic device of claim 11, wherein the processor is configured to:
capture the user's iris through the camera module to acquire an iris image;
receive iris information corresponding to the authenticated face information of the user from the external electronic device;
compare the acquired iris image with the received iris information to perform iris authentication;
in case that iris feature information extracted from the iris image substantially matches the received iris information, determine that the iris authentication of the user has succeeded; and
in case that the iris authentication has succeeded, complete connection with the external electronic device.

15. An operation method of an electronic device, the method comprising:
acquiring, based on a request for connection with an external display device, a face image of a user through a camera module of the electronic device in a state in which the external display device is worn;
performing face authentication by comparing the acquired face image with face information stored in a memory of the electronic device;
in case that the face authentication has been completed, displaying, on a display of the electronic device, an authentication code associated with the external display device associated with the stored face information;
receiving a request for communication connection with the electronic device from the external display device through a communication module of the electronic device, based on an authentication result of the authentication code in the external display device;
comparing iris information stored in a security area of the memory in association with the authenticated face information to perform iris authentication; and
in case that the iris authentication is completed, establishing connection with the external display device.
